Europäisches Patentamt

European Patent Office

Office européen des brevets

(19)

(11) EP 0 526 510 B1

(12) EUROPÄISCHE PATENTSCHRIFT

(45) Veröffentlichungstag und Bekanntmachung des Hinweises auf die Patenterteilung:
05.03.1997 Patentblatt 1997/10

(21) Anmeldenummer: 91908083.8

(22) Anmeldetag: 23.04.1991

(51) Int Cl.⁶: H04N 1/46

(86) Internationale Anmeldenummer:
PCT/DE91/00325

(87) Internationale Veröffentlichungsnummer:
WO 91/16785 (31.10.1991 Gazette 1991/25)

(54) **VERFAHREN UND VORRICHTUNG ZUR ERZEUGUNG EINER DIGITALEN DRUCKTABELLE FÜR DRUCKFARBEN BEI BILDREPRODUKTIONSGERÄTEN**

PROCESS AND DEVICE FOR GENERATING A DIGITAL PRINTING-COLOUR TABLE FOR IMAGE-REPRODUCTION EQUIPMENT

PROCEDE ET DISPOSITIF POUR LA PRODUCTION D'UNE TABLE D'IMPRESSION NUMERIQUE POUR LES COULEURS D'IMPRIMERIE DANS LES APPAREILS DE REPRODUCTION DES IMAGES

(84) Benannte Vertragsstaaten:
DE FR GB

(30) Priorität: 23.04.1990 DE 4012905

(43) Veröffentlichungstag der Anmeldung:
10.02.1993 Patentblatt 1993/06

(73) Patentinhaber: LINOTYPE-HELL AG
65731 Eschborn (DE)

(72) Erfinder:
• KOWALEWSKI, Joern
  D-6236 Eschborn (DE)
• VORHAGEN, Friedrich, Wilhelm
  D-5190 Stolberg (DE)

(56) Entgegenhaltungen:
EP-A- 0 273 398        EP-A- 0 321 983

**Beschreibung**

Die Erfindung bezieht sich auf ein Verfahren zur Erzeugung einer digitalen Drucktabelle für Druckfarben bei Bildreproduktionsgeräten aus durch photoelektrische Abtastung einer Vorlage gewonnenen Farbabtastwerten.

Grundlage für die Generierung einer Transformationstabelle, die Primärfarben "RGB" in Komplementärfarben "CMYK", ist die spektralfotometrische Vermessung einer mit dem Prozeß (z. B. Offset, Euroskala, gestrichenes Papier), für den diese Tabelle später gelten soll, erzeugten Farbskala. Mit beliebig hohem Aufwand ließe sich so für jede geforderte Farbvalenz aus einer Skala mit 1 % Stufung der Druckfarben, also 100*100*100 Farbfeldern, das richtige Feld herausmessen. Ein solches Verfahren lieferte, wenn immer der Farbbereich der Skala nicht überschritten wird, die bis auf 1 % genaue Rezeptur in für die Komplementärfarben "CMY". Hochgesättigte Töne finden kein entsprechendes Feld. Außerdem sind 1 Million Messungen für die Erzeuger einer Tabelle unpraktikabel.

Es ist eine Farbkorrektureinrichtung für Bildreproduktionsgeräte bekannt, mit der durch photoelektrisches Abtasten erhaltene, digitalisierte Farbdichtewerte einzelner Farbauszüge in komplementäre Farbdichtewerte umgewandelt werden. Mit den komplementären Farbdichtewerten lassen sich Farbauszugnegative gewinnen. Die komplementären Farbdichtewerte werden mittels in einem Speicher abgelegter, durch die Farbdichtewerte adressier- und auslesbare Korrekturdaten farbkorrigiert. Aus den Farbdichtewerten wird eine Graukomponente ermittelt. Dies geschieht durch Vergleich der Farbdichtewerte. Die Graukomponente wird durch Vergleich mit einem vorbestimmten Weißlichtwert zu einem äquivalenten Grauwert verarbeitet, mit dem ein Speicher adressiert wird, der zu jedem komplementären Farbdichtewert einen spezifischen Grauwert enthält. Durch Subtraktion der Graukomponenten von den Farbdichtewerten werden komplementäre Farbdichtewerte erzeugt. Die einzelnen komplementären Farbdichtewerte werden jeweils mit einem zugehörigen spezifischen Grauwert kombiniert. Durch die voneinander unabhängige Korrektur des chromatischen Anteils und des Grauanteils läßt sich Speicherraum für die Umwandlungstabelle einsparen (DE-B-30 15 396).

Der Erfindung liegt u.a. die Aufgabe zugrunde, ein Verfahren zur Erzeugung einer digitalen Drucktabelle (Speichertabelle) komplementärer Druckfarben für Bildreproduktionsgeräte aus durch photoelektrische Abtastung einer Vorlage gewonnenen normierten Farbabtastwerten, z. B. EBU Rot, Grün, Blau, zu entwickeln, mit dem aus wenig Meßfeldern eine für die Ermittlung der Anteile der Druckfarben hinreichend genaue Drucktabelle erstellt werden kann. Auch sollen nicht druckbare Farbvalenzen auf sinnvolle Ersatzwerte gebracht werden.

Die Aufgabe wird erfindungsgemäß im wesentlichen dadurch gelöst, daß die Vollfarben der drei Druckfarben und weiß durch Abtastung entsprechender Vorlagen gemessen werden, daß Modellfarben bestimmt werden, die in möglichst linearer Beziehung zu den Druckfarben durch eine derartige Lage des Farbartbereichs der Druckskala stehen, daß die Primärvalenzen der Modellfarben im Farbartdiagramm je auf einem Strahl der Trajektorien der Skalenfarben durch den Weißpunkt liegen, und daß das zwischen den Primärvalenzen aufgespannte Dreieck den Farbartbereich der Druckskala umschließt, daß die Skalenteilung der Primärvalenzen mit der dritten Wurzel an eine lineare Stufung der Druckfarben angepaßt ist, daß aus den Raumdiagonalen der Druckfarben in Abhängigkeit von den Modellfarben die Anzahl der abzutastenden Felder bestimmt wird, deren Abtastwerte durch eine kubische Splineinterpolation mit einer höheren Stützstellenzahl zur Gewinnung der Drucktabelle weiterverarbeitet werden, und daß die Werte der Modellfarben je in Abhängigkeit von den Druckfarbenwerten abgespeichert werden.

Aus der gespeicherten Drucktabelle wird vorzugsweise eine Drucktabelle der Druckfarben in Abhängigkeit von den Modellfarben gebildet. Die letztere Tabelle wird bei den Reproduktionsgeräten eingesetzt, um die Anteile der Druckfarben für die Vorlagemeßwerte zu bestimmen.

Ein wesentliches Element der Erfindung beruht auf der Aufstellung eines Rechenmodells, dessen Koordinatenachsen möglichst gut mit den Achsen der Druckskala (Cyan, Magenta und Gelb) übereinstimmen. Eine Komponente des Modellfarbraums hängt weitgehend linear von einer und nur einer Druckfarbe ab. Der CIE-XYZ-Farbraum der Internationalen Beleuchtungskommission erfüllt im Gegensatz zum oben beschriebenen Modellfarbraum diese Forderungen nicht, denn die Richtungen seiner Koordinatenachsen stimmen auch nicht annähernd mit denen der Primärvalenzen der Druckskala überein. Besonders ungünstig ist es, daß gleich große Farbabstände an verschiedenen Stellen der Druckskala auf unterschiedlich große Differenzen im CIE-XYZ-Farbraum abgebildet werden. Die oben erwähnten Ersatzfarben $C_t$, $M_t$ und $Y_t$ beschreiben die Druckfarben annähernd und lassen sich vorteilhafterweise geschlossen in Werte des CIE-XYZ-Farbraums umrechnen. Durch die Beziehung $C_t = 1-R$ wird die Ersatzfarbvalenz $C_t$ zur Farbvalenz $C_s$ proportional. Durch die Gewichtung mit der 3. Wurzel wird die Abhängigkeit mit der Modellfarbe von der Druckfarbe linearisiert. Die Umrechnung zwischen den Koordinaten des RGB-Farbraums und des CIE-XYZ-Farbraums und umgekehrt geschieht mit je einer Transformationsmatrix, die an sich bekannt ist (Richter: *Einführung in die Farbmetrik,* Kap. 6).

Der Aufwand für die Erstellung einer Druckskala hängt von der Anzahl der zu vermessenden Felder ab. Ein vertretbarer Aufwand ergibt sich dann, wenn die Anzahl der zu messenden Felder nicht größer als einige hundert ist. Wenn für jede Koordinatenachse der Druckskala Abtastwerte erzeugt werden, müssen $n^3$ Felder gemessen werden. Die Anzahl der Abtastwerte muß eine ausreichend genaue Erfassung der Druckskala sicherstellen.

In der Raumdiagonalen des Koordinatensystems der Vollfarben $C_s$, $M_s$ und $Y_s$ sind die anteiligen Grundfarben der Druckskala gleich stark vertreten. Mit dieser Raumdiagonalen als "Grauachse" können Rückschlüsse auf die noch verbleibenden Nichtlinearitäten der Druckskala bezüglich des Modellfarbraums gezogen werden. Auf der Grundlage der Abhängigkeit der Farbtonwerte von den Druckskalenwerten in der "Grauachse" werden die minimal nötigen (nicht äquidistanten) Abtastschritte ermittelt. Es werden die Abtastschritte so ausgewählt, daß sich längs der "Grauachse" Punkte ergeben, die möglichst gleichmäßig verteilt sind und zugleich an Stellen mit möglichst wenig Abweichungen zwischen den Ersatzfarben liegen.

Vorzugsweise werden höchstens sieben Abtastschritte festgelegt. Die $n^3$ Abtastwerte werden anschließend mit einer kubischen Splineinterpolation auf eine bestimmte Stützstellenanzahl hochgerechnet, die größer ist als die Zahl der Abtastschritte. Es hat sich gezeigt, daß eine Stützstellenanzahl von $32^3$ Werten günstig ist. Durch die kubische Splineinterpolation ergeben sich Farbwürfel, in denen Druckfarbenwerte liegen. Die Unterteilung des Skalenraums ist dabei äquidistant, d. h. in jeder Druckfarbe ergibt sich ein Farbwürfel mit einer Abtastdichte von ca. 3 %.

Die auf die oben beschriebene Weise erstellte Tabelle gibt die Abhängigkeit der Farbvalenz von den Druckfarbenanteilen an. Aus der Tabelle können die Anteile der Druckfarben, die zur Darstellung einer Farbvalenz benötigt werden, ermittelt werden.

Bei einer bevorzugten Ausführungsform werden zur Erzeugung einer Tabelle, die die zur Darstellung einer Farbvalenz notwendigen Anteile der Druckfarben $C_s$, $M_s$, $Y_s$ angibt, für alle interessierenden Kombinationen von Farbvalenzen iterativ die zugehörigen Kombinationen der Druckfarben ermittelt, indem, ausgehend von einem beliebigen Punkt in der Druckskalentabelle, zunächst die Differenz zwischen der jeweils geforderten Farbvalenz und einem beliebigen Skaleneinsprung und das vollständige Differential in diesem Punkt zur Festlegung eines Vektors berechnet wird, der nach Betrag und Richtung in Skaleninkrementen den Übergang zu einem anderen, der geforderten Farbvalenz besser entsprechenden Skaleneinsprung angibt, für den entsprechende Rechenschritte zur Festlegung eines weiteren Vektors durchgeführt werden, der den Übergang zu einem, der geforderten Farbvalenz besser entsprechenden Skaleneinsprung angibt, wobei die Rechenschritte zur Bestimmung zusätzlicher Skaleneinsprünge so lange wiederholt werden, bis der sich ergebende Skaleneinsprung gleich bleibt, und wobei dann noch verbleibende Farbwertdifferenzen durch trilineare Interpolation minimiert werden. Durch dieses Verfahren, das als Umstülpung bezeichnet werden kann, ergibt sich eine Drucktabelle von RGB oder von irgendwelchen auf CIE-XYZ-Koordinaten beruhenden Farben nach CMY.

Es kann vorkommen, daß eine außerhalb des Farbartbereichs der vermessenen Druckskala liegende Farbvalenz gewünscht wird. Der Iterationsprozeß liefert solche Farbvalenzen, für eine oder mehrere Farben einen Flächendekkungsgrad >100 % oder/und < 0 %. Dies sind nicht darstellbare, hochgesättigte Farben. Um trotzdem Farbvalenzen für außerhalb des Farbartbereichs der vermessenen Druckskala liegende Farben darstellen zu können, wird zweckmäßigerweise ein anderes Farbmodell ausgenutzt, das auf dem Farbton, der Sättigung und der Luminanz beruht (HSL-Farbmodell). Wenn der Iterationsprozeß den Farbraum der Drucktabelle verläßt, dann ist es vorteilhaft, die geforderte Farbvalenz unter Bezug auf die nächste mit der Drucktabelle erreichbare Farbvalenz zu korrigieren. Während eine Änderung des Farbtons nicht vorkommen sollte, darf die Korrektur eine Ersatzfarbe ergeben, die eine geringere Sättigung bei sehr hellen oder dunklen Farbtönen und gegebenenfalls eine geringfügig andere Luminanz hat.

Um für eine Farbvalenz außerhalb des Farbartbereichs der vermessenen Druckskala die Druckfarben zu bestimmen, wird zweckmäßigerweise ein Farbraum entsprechend dem von der Internationalen Beleuchtungskommission (CIE) festgelegten Lab-Modell auf Farbton, Sättigung und Luminanz wie folgt umgerechnet:

$$L = 116 \left(\left(\sqrt[3]{(Y/Y_0)}-16\right)\right.$$

$$a = 500 \left(\sqrt[3]{(X/X_o)} - \sqrt[3]{(Y/Yo)}\right)$$

$$b = 200 \left(\sqrt[3]{(Y/Y_o)} - \sqrt[3]{(Z/Z_o)}\right)$$

$$H = \arctan(b/a)$$

$$S = \sqrt{(a^2 + b^2)},$$

mit $X_0$, $Y_0$, $Z_0$ als Farbvalenz des Weißpunktes (vergleiche DIN 6174) und worin mit "L" die Luminanz, mit "H" der Farbton, mit "S" die Sättigung und mit "X, Y, Z" die virtuellen Primärvalenzen als Normalvalenzen bezeichnet sind, wobei in einer Tabelle mit je einem Adreßraum für die Luminanz, für den Farbton und die Sättigung die entsprechenden Werte unter Festlegung des maximalen Werts der Luminanz für maximale Aussteuerungen der Primärvalenzen und unter Normierung der Sättigung auf den maximalen in den Blautönen auftretenden Wert, abgelegt werden, und wobei für alle auftretenden Kombinationen des Farbtons, der Sättigung und der Luminanz durch Iteration die Werte der Druckfarben bestimmt und gespeichert werden. So kann der Punkt, an dem der geforderte Farbwert den Bereich der Drucktabelle verläßt, nur in Abhängigkeit von der Sättigung bestimmt werden. Allen Sättigungen über diesem Wert kann dann bei konstanter Luminanz und konstantem Farbton das Druckfarbentriple des letzten erreichten Farbwerts zugeordnet werden.

Für die Erzeugung von Druckergebnissen in dunklen Tönen wird vorzugsweise ein Schwarzauszug generiert, der mit einem Densitometer von einer Testform gewonnen wird, die die Anzahl bunter Grau balken aufweist, von denen jeder einen konstanten Schwarzanteil enthält, wobei die Farbdichtewerte in Luminanzen umgerechnet werden und wobei mit einer Splineinterpolation die Datendichte so weit erhöht wird, daß für jede dreifarbige Luminanzebene die Abhängigkeit der Luminanzabnahme von der Schwarzzugabe in vorgegebenen Schritten vorliegt. Wenn ein Farbton mit einer Sättigung bei vorgegebener Luminanz nicht mehr dreifarbig erreicht werden kann, wird auf die nächsthöhere Luminanzebene, die den Farbton darstellen kann, übergegangen und anschließend die Luminanz durch Zugabe von Schwarz auf den geforderten Wert vermindert.

Um Speicherplatz einzusparen, wird nicht die Drucktabelle der Druckfarben unmittelbar durch die gemessenen Farbvalenzen adressiert. Es werden die Primärfarben jeweils in eine Anzahl Klassen repräsentativer Werte eingeteilt, die in einer gesonderten Tabelle gespeichert werden. Von dieser gesonderten Tabelle aus wird die dreidimensionale Tabelle mit den Druckfarben angesteuert, die deshalb nur eine der dritten Potenz der Anzahl Klassen entsprechende Zahl von Speicherplätzen benötigt. Die Anzahl Klassen werden vorzugsweise an die menschliche Empfindlichkeitskurve angepaßt, indem die Primärvalenzen in unter der 3. Wurzel gleich große Bereiche eingeteilt werden.

Besonders hervorzuheben ist, daß eine Veränderung der Luminanz $\Delta L$ in Abhängigkeit von Schwarz erfolgt ($\Delta L = f(K)$).

Eine Vorrichtung zur Durchführung der oben beschriebenen Verfahren enthält erfindungsgemäß eine Lichtquelle und einen Meßkopf, an den ein Spektralfotometer angeschlossen ist, das ausgangsseitig mit einer-Ablaufsteuerung und einem Farbtransformator verbunden ist, an den ein von der Ablaufsteuerung gesteuerter kubischer Splineinterpolator angeschlossen ist, mit dem ein von der Ablaufsteuerung gesteuerter digitaler Speicher verbunden ist. Die Ablaufsteuerung ist vorzugsweise ein Zentralrechner.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von in der Zeichnung dargestellten bevorzugten Ausführungsbeispielen.

Es zeigen:

Fig. 1 eine Vorrichtung zur Erzeugung einer digitalen Drucktabelle komplementärer Druckfarben im Schema,

Fig. 2 ein Ablaufdiagramm der für die Erzeugung der Drucktabelle durchgeführten Verfahrensschritte,

Fig. 3 eine Farbtafel für Ersatzfarben schematisch,

Fig. 4a, b Diagramme der Ersatzfarben in Abhängigkeit von Grauwerten,

Fig. 5a, b ,c Druckskalentabellen für die drei Ersatzfarben in Abhängigkeit von den Druckfarben,

Fig. 6a, b Einzelheiten der in Fig. 5 dargestellten Druckskalentabellen,

Fig. 7 eine perspektivische Ansicht eines Farbraums,

Fig. 8e ein Diagramm der Luminanz als Funktion der Sättigung bei konstantem Farbton einer Ebene des in Fig. 7 dargestellten Farbraums,

Fig. 9 eine Speicheraufteilung im Schema,

Fig. 10 ein Diagramm der Quantisierung der Primärvalenzen.

Für die Erzeugung einer digitalen Drucktabelle für komplementäre Druckfarbenanteile, die bei Bildreproduktionsgeräten verwendet wird, sind eine Reihe von Meßfeldern auf Testbögen (1), (2), (3) vorgesehen. Auf dem Testbogen (1) sind mit (4) bezeichnete Meßfelder vorhanden, die jeweils aus den drei komplementären Farben Cyan, Magenta und Gelb bestehen. der Gelbanteil ist für alle Meßfelder eines Testbogens gleich, wechselt aber von Testbogen zu Testbogen. Die Farbanteile von Cyan und Magenta sind auf den Testbögen (1), (2), (3) verschieden.

Die Meßfelder (4) auf den jeweiligen Testbögen (1), (2), (3) werden nacheinander mittels eines eine nicht dargestellte Lichtquelle und photoelektrische Empfänger enthaltenden Meßkopfs (5) abgetastet, dem ein Spektralfotometer (6) nachgeschaltet ist, das von einer Ablaufsteuerung (7) gesteuert wird. Das Spektralfotometer (6) erzeugt an seinem Ausgang (8) Farbwerte in der CIE-Norm, d. h. Normalfarbwerte, die der Ablaufsteuerung (7) und einem Farbtransformator (9) zugeführt werden, der aus den Normalfarbwerten Ersatzfarbwerte bzw. Modellfarbwerte erzeugt. Die Ersatzfarbwerte, auch Modellfarbwerte genannt, werden einem kubischen Splineinterpolator (10) zugeführt, der von der Ablaufsteuerung (7) gesteuert wird. Der Splineinterpolator (10) gibt eine Druckfarbentabelle aus, die in einen digitalen Speicher (11) abgelegt wird. Das Spektralfotometer (8) weist eine Farbkorrektur auf.

Für den Druck muß ein durch RGB-Farbpixel definiertes Bild in die vier Farbseparationen Cyan, Magenta, Gelb und Schwarz umgewandelt werden. Aus einem RGB-Datentripel wird durch eine im folgenden näher beschriebene Transformation das jeweils benötigte Mengenverhältnis der Druckfarben bestimmt. Grundlage für die Generierung der Transformationstabelle der RGB-Farbwerte in CMYK-Farbwerte ist die spektralfotometrische Vermessung der mit dem Prozeß (z. B. Offset, Euroskala, gestrichenes Papier), für den die Transformationstabelle gelten soll, erzeugten Farbskala auf den Testbögen (1), (2), (3). Mit sehr hohem Aufwand ließe sich so für jede geforderte Farbvalenz aus einer Skala mit 1 % Stufung der Druckfarben, also 100 *100 *100 Farbfeldern, das richtige Feld herausmessen. Ein solches Verfahren lieferte, wenn immer der Farbbereich der Skala nicht überschritten wird, die bis auf 1 % genaue Rezeptur in CMY. Hochgesättigte Töne finden kein entsprechendes Feld. Außerdem sind 1 Million Messungen für die Erzeugung einer Tabelle unpraktikabel. Mit der Erfindung ist es möglich, mit einem Minimum von Meßfeldern eine Druckskala hinreichend genau zu beschreiben und nicht druckbare Farbvalenzen auf sinnvolle Ersatzwerte zu bringen.

Es wird ein Rechenmodell eingeführt, dessen Koordinatenachsen möglichst gut mit den Achsen der Druckskala für Cyan, Magenta und Gelb übereinstimmen, d. h. eine Komponente des Modellfarbraums soll möglichst linear von einer und nur einer Druckfarbe abhängen. Das CIE-Normfarbmodell erfüllt diese Forderung nicht. Die Richtungen seiner Koordinatenachsen stimmen auch nicht annähernd mit denen der Primärvalenzen der Skala überein, und gleich große Farbabstände an verschiedenen Stellen der Skala werden auf unterschiedlich große Differenzen in XYZ abgebildet.

Es werden daher ideale Ersatzfarben für Cyan, Magenta und Gelb, die im folgenden auch mit $C_t$, $M_t$, $Y_t$ bezeichet sind, definiert, welche die im folgenden auch mit $C_s$, $M_s$, $Y_s$ bezeichneten Druckfarben für Cyan, Magenta und Gelb annähernd beschreiben, sich aber geschlossen in die XYZ-Koordinaten der Normfarbtafel umrechnen lassen.

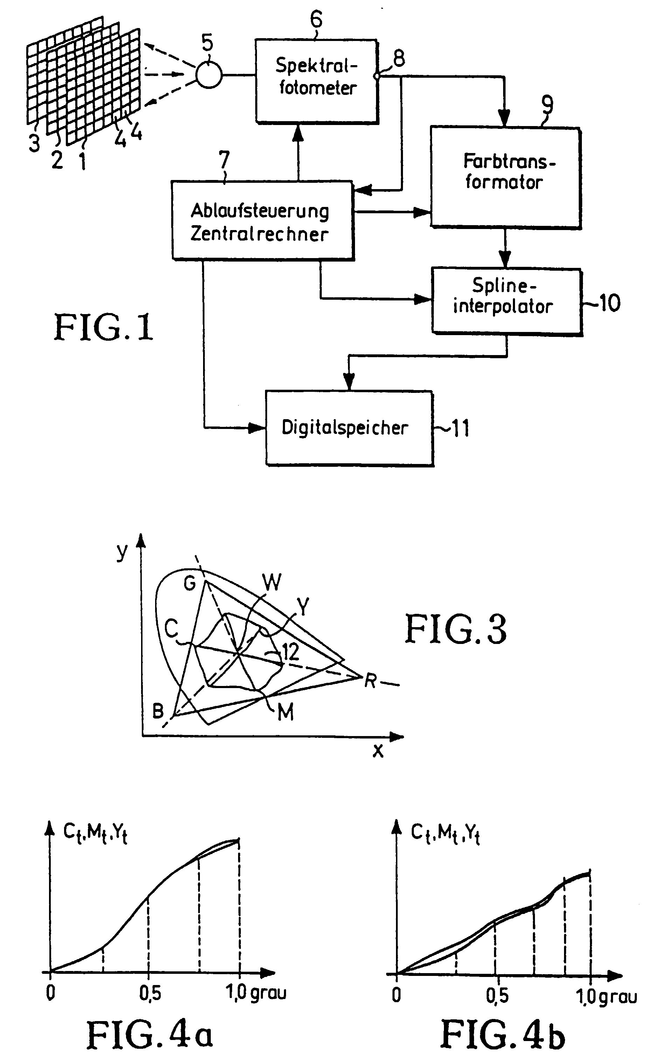

Die Fig. 3 zeigt den Farbartbereich der Druckskala in der Normfarbtafel. Die Primärvalenzen Rot, Grün und Blau, die im folgenden auch mit R, G, B bezeichnet werden, wie aus Fig. 3 ersichtlich, sind im Modell der idealen Ersatzfarben so gelegt, daß die gesamte Druckskala (12) innerhalb des durch RGB aufgespannten Dreiecks liegt. R liegt auf der Verlängerung der Cyan Ortskurve durch den Weißpunkt, G auf der von Magenta und B auf der von Gelb. Das stellt eine optimale Entkopplung der Farben voneinander im Modell sicher. Mit der Beziehung C1 = 1-R wird $C_t$ zu $C_s$ pro-portional, durch die Gewichtung mit der 3. Wurzel wird die Abhängigkeit des Modellfarbstoffes von der Druckfarbe linearisiert.

Es gilt:

$$Ct = \sqrt[3]{(1\text{-}R)}; \ M_t = \sqrt[3]{(1\text{-}G)}; \ Y_t = \sqrt[3]{(1\text{-}B)}.$$

Die Umrechnung vom RGB nach XYZ und zurück geschieht mit je einer Transformationsmatrix (vgl. Richter, Kap. 6).

Um den Aufwand für die Vermessung einer Druckskala zu begrenzen, ist es zweckmäßig, wenn die Anzahl der zu messenden Felder nicht größer als einige hundert ist. Nimmt man in jeder Koordinatenachse Abtastwerte, so müssen $n^3$ Felder eingemessen werden. Besonders günstig ist es, wenn n nicht größer als 7 ist. Im übrigen gilt, solange die Skala genau genug erfaßt wird, der Satz "je weniger desto besser".

In der Raumdiagonale im räumlichen $C_s M_s Y_s$-Koordinatensystem sind die anteiligen Grundfarben der Skala gleich stark vertreten. Diese Raumdiagonale der "Grauachse" läßt Rückschlüsse auf die verbleibenden Nichtlinearitäten der Druckskala bezüglich des Modellfarbraums zu. Anhand der Abhängigkeit der Tonwerte von den Skalenwerten in der Grauachse werden daher die minimal nötigen (nicht äquidistanten) Abtastschritte ermittelt. Die Fig. 4a und 4b zeigen zwei unterschiedliche Offsetskalen. Die erste Druckskala wird zweckmäßigerweise in den Punkten 0 %, 30 %, 50 %, 80 %, 100 % und deren Kombinationen abgetastet. Die andere Skala erfordert minimal 6 Abtastwerte je Koordinate (0 %, 30 %, 45 %, 70 %, 85 %, 100 %).

Für die Erzeugung der Drucktabelle werden daher in einem ersten Schritt (13) (siehe Fig. 2) Felder der Vollfarben $C_s$, $M_s$ und $Y_s$ und von Weiß gemessen. Im ersten Schritt (13) werden digitale Daten gewonnen, in denen die $C_s M_s Y_s$-Trajektorien der Farbspinne enthalten sind. Auf den Schritt (13) folgt ein Schritt (14), in dem die Primärvalenzen $R_t$, $B_t$, $G_t$ des Modellsystems für $C_t$, $M_t$, $Y_t$ auf die oben beschriebene Art berechnet werden. Die berechneten Primärvalenzen werden in den Farbtransformator (9) geladen. Danach wird einSchritt (15) durchgeführt, in dem die Raumdiagonale der Druckskala (12) aus den im Schritt (13) gewonnenen Daten erzeugt wird. Hierzu ist eine gewisse Anzahl von äquidistanten Werten längs der Raumdiagonalen notwendig. Es hat sich gezeigt, daß eine Erfassung in m Punkten mit m> 10 günstig ist. Sodann wird in einem Schritt (16) aus der Raumdiagonalen die Zahl der n Abtastwerte bestimmt, durch die die Raumdiagonale möglichst genau angenähert wird. Wie oben erwähnt, sollte n < 7 sein. Die n Abtastwerte ergeben, wie oben erwähnt, $n_3$ Abtastwerte, die von einer entsprechenden Zahl von Meßfeldern gewonnen werden. Im nachfolgenden Schritt (17) werden die Meßvorschriften, für die $n^3$ Meßfelder der Testbogen (1), (2), (3) generiert. Nach der Erzeugung der Meßvorschrift werden mittels der in Fig. 1 dargestellten Vorrichtung rechnergeführte $n_3$ Meßwerte von Testbögen (1), (2), (3) in einem Schritt (18) erfaßt und gespeichert. Das Verfahren wird in einem Schritt (19) fortgesetzt, in dem die $n^3$ Abtastwerte mit einer kubischen Splineinterpolation auf eine größere Stützstellenanzahl hochgerechnet werden. Es hat sich gezeigt, daß eine Stützstellenanzahl von $32^3$ günstig ist.

Die Unterteilung des Skalenraumes ist dabei äquidistant, d. h. nach der Interpolation liegt der Farbwürfel der Skala mit einer Abtastdichte von ca. 3 % in jeder Farbe vor. Man beachte, daß dieser Farbkörper unter Umständen die eingemessenen Stützwerte selbst gar nicht mehr enthält. Die verwendete Splinefunktion geht von konstanter Steigung vor dem ersten und nach dem letzten Intervall aus. Die Reihenfolge der Farben :

1.) C von n nach 32 an n x n Stellen mit konstantem M und Y.
2.) M von n nach 32 an 32 x n Stellen mit konstantem C und Y.
3.) Y von n nach 32 an 32 x 32 Stellen mit konstantem C und M.

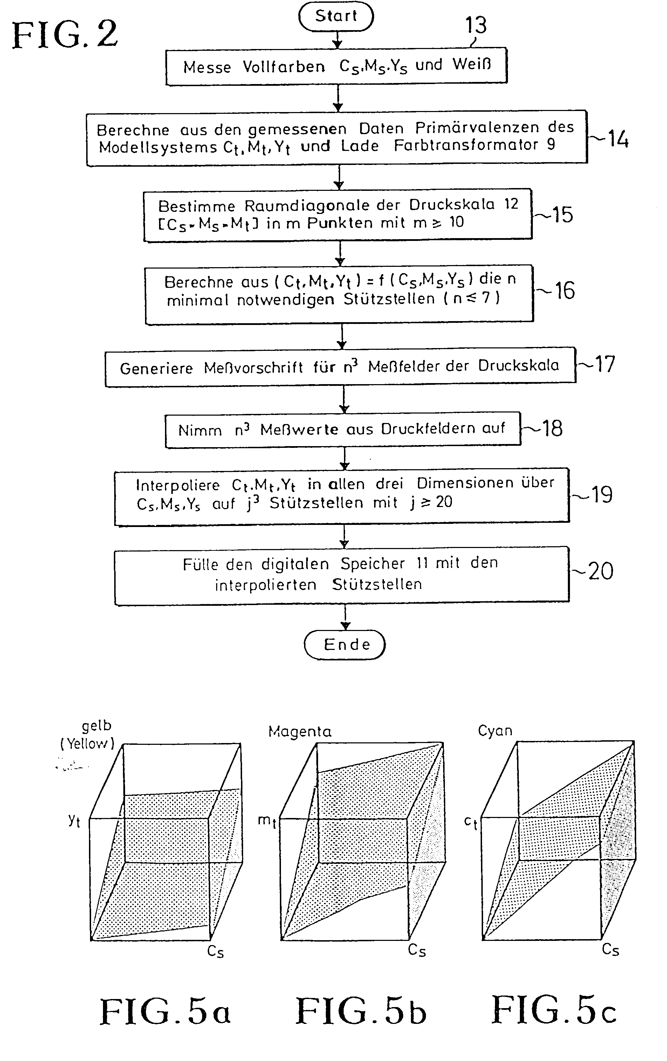

Es ergeben sich dabei Druckfarbentabellen für die einzelnen Druckfarben, die in den Fig. 5a, b und c jeweils die interpolierten Ersatzfarben $Y_t$, $M_t$, $C_t$ in Abhängigkeit von den Druckfarben $Y_s$, $M_s$, $C_s$. Die durch Interpolation gewonnenen Stützstellen in Abhängigkeit der Druckfarben werden in einem Schritt (20) in den digitalen Speicher (11) eingegeben, in dem sie unter entsprechenden Adressen verfügbar sind.

Die aus der Druckskala interpolierte Tabelle beschreibt die Abhängigkeit der Farbvalenz von den Druckfarbenanteilen, kurz:

$$C_t, M_t, Y_t (C_s, M_s, Y_s) \qquad (I).$$

Bei den Bildreproduktionsgeräten sind für die Zumessung der Druckfarben die Anteile der Druckfarben notwendig, die zur Darstellung der Farbvalenz aufgebracht werden müssen, d. h.

$$C_s, M_s, Y_s (C_t, M_t, Y_t) \qquad (II).$$

Die Umformung der Drucktabelle, die von (I) nach (II) führt, wird im folgenden Umstülpung genannt. Für alle interessierenden Kombinationen in einem Valenzsystem (z. B. dem EBU-RGB der European Broad-casting Union) wird iterativ die zugehörige Kombination von Druckfarben ermittelt. Ausgehend von einem beliebigen Punkt in der Skalentabelle (im weiteren als Druckskala bezeichnet) wird zunächst die Differenz zwischen der geforderten Farbvalenz und der des beliebigen Skaleneinsprunges und das vollständige Differential in diesem Punkt berechnet. Das führt zu einem Vektor, welcher nach Betrag und Richtung in Skaleninkrementen den Übergang zu einem neuen, dem geforderten Farbwert besser entsprechenden Skaleneinsprung angibt. Diese Rechenschritte werden wiederholt (Iteration) bis der Einsprung in die 32*32*32*-Elemente große Tabelle konstant bleibt. Diese verbleibenden Farbwertdifferenzen werden dann durch lineare Interpolation minimiert (konstantes Differential im Dreibein). Resultat ist dann typischerweise eine Tabelle von RGB oder HSL nach CMY mit $64^3$ bis $80^3$ Einträgen. Zu beachten ist, daß dieses Verfahren nur dann auf den richtigen Endwert konvergiert, wenn sich innerhalb des Modells die Vorzeichen der Differentialquotienten nicht ändern. Daher wird die Skala schon bei der Splineinterpolation auf monoton ansteigende Modellwerte bei zunehmenden Skalenwerten untersucht. Wird diese Bedingung z. B. durch Ungenauigkeiten bei der spektralfotometrischen Messung verletzt, so müssen die entsprechenden Abtastwerte in diesen nicht zulässigen Abhängigkeiten (z. B. $\Delta C_t (\Delta Y_s)$) nachkorrigiert werden. Die Annahme dieser Nebenbedingung ist zulässig, da in der Regel eine Zunahme einer Druckfarbe auch eine Zunahme in den Modellvalenzen bewirkt.

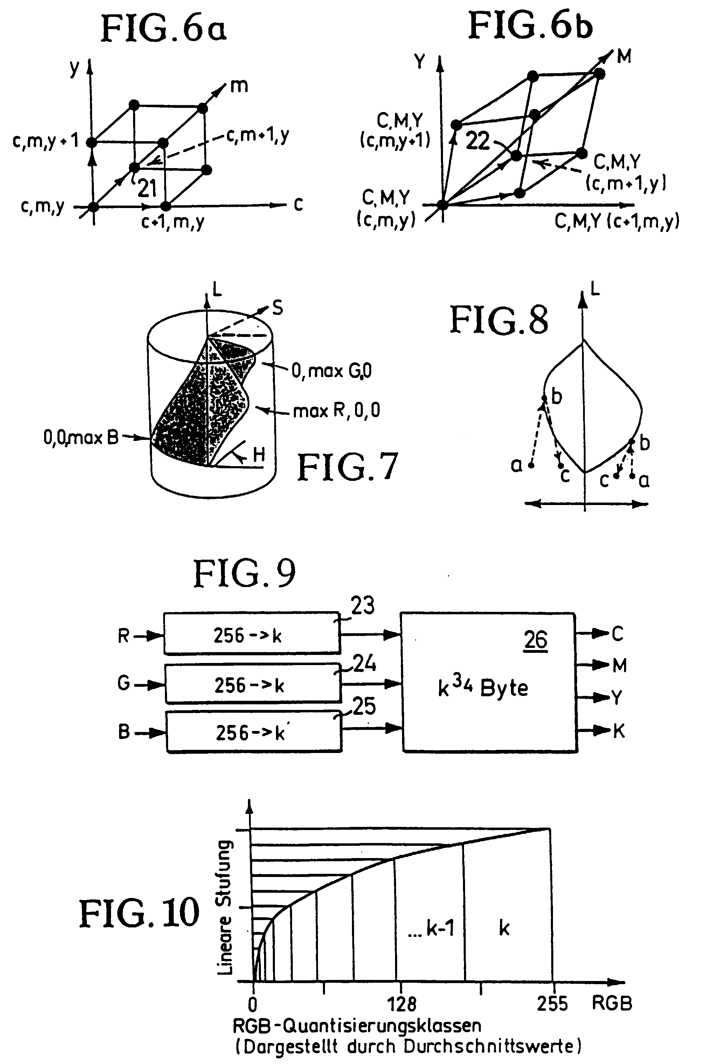

In Fig. 6a ist ein beliebiger Punkt (21) dargestellt, dem die Koordinatenwerte c, m + 1, y zugeordnet sind. Die oben beschriebene Umstülpung liefert gemäß Fig. 6b am Punkt (22) die Werte $C_s, M_s, Y_s$ (c,m + 1,y). Der Punkt (21) als Stützstelle ist von nicht mit Kennziffern bezeichneten Punkten als weitere Stützustellen umgeben. Die Fig. 6b zeigt die Modellwerte an den Stützstellen.

Die Umstülpung wird gemäß den folgenden Formeln durchgeführt:

Wird der Raum der Druckskala mit den 32**3 Stützstellen als stückweise linear betrachtet, gilt im an einer beliebigen Stützstelle aufgestellten Dreibein für den Farbabstand:

$$
\begin{Bmatrix} \Delta C_t \\ \Delta M_t \\ \Delta Y_t \end{Bmatrix} = \begin{Bmatrix} \dfrac{\partial t}{\partial s} \end{Bmatrix} \begin{Bmatrix} \Delta C_s \\ \Delta M_s \\ \Delta Y_s \end{Bmatrix}
$$

(indices s kennzeichnen die Druckskala, t steht für den Modellfarbraum;)
mit:

$$
\begin{Bmatrix} \dfrac{\partial t}{\partial s} \end{Bmatrix} = \begin{Bmatrix} \dfrac{C(c+1.m.y)-C(c.m.y)}{\Delta c} & \dfrac{C(c.m+1.y)-C(c.m.y)}{\Delta m} & \dfrac{C(c.m.y+1)-C(c.m.y)}{\Delta y} \\[2mm] \dfrac{M(c+1.m.y.-M(c.m.y)}{\Delta c} & \dfrac{M(c.m.+1.y)-M(c.m.y)}{\Delta m} & \dfrac{M(c.m.y+1)-M(c.m.y)}{\Delta y} \\[2mm] \dfrac{Y(c+1.m.y)-Y(c.m.y)}{\Delta c} & \dfrac{Y(c.m+1.y)-Y(c.m.y)}{\Delta m} & \dfrac{(Y(c.m.y.+1)-Y(c.m.y)}{\Delta y} \end{Bmatrix}
$$

(indices t an C, M, Y weggelassen. c, m, y sind Einsprungsstellen in die Skala 0<c,m,y<32)

Mit der Annahme, daß die Schrittweiten in der Skala konstant und in allen Richtungen gleich sind, folgt:

$$
\begin{Bmatrix} \dfrac{\partial t}{\partial s} \end{Bmatrix} = \dfrac{1}{\Delta} \begin{Bmatrix} C(c+1.m.y)-C(c.m.y) & C(c.m+1.y)-C(c.m.y) & C(c.m.y+1)-C(c.m.y.) \\ M(c+1.m.y.-M(c.m.y) & M(c.m.+1.y)-M(c.m.y) & M(c.m.y+1)-M(c.m.y) \\ Y(c+1.m.y)-Y(c.m.y) & Y(c.m+1.y)-Y(c.m.y) & Y(c.m.y.+1)-Y(c.m.y) \end{Bmatrix}
$$

($\Delta$ = constante Schrittweite, entspricht der Zunahme von Druckfarbe/Skaleneinsprung)

Von einem Iterationsschritt zum nächsten (n → n + 1) gilt:

$$
\begin{Bmatrix} C_s \\ M_s \\ Y_s \end{Bmatrix}_{n+1} = \begin{Bmatrix} C_s \\ M_s \\ Y_s \end{Bmatrix}_n + \begin{Bmatrix} \Delta C_s \\ \Delta M_s \\ \Delta Y_s \end{Bmatrix}_n = \begin{Bmatrix} C_s \\ M_s \\ Y_s \end{Bmatrix}_n + \begin{Bmatrix} \dfrac{\partial t}{\partial s} \end{Bmatrix}_n^{-1} \begin{Bmatrix} \Delta C_t \\ \Delta M_t \\ \Delta Y_t \end{Bmatrix}_n
$$

mit:

$$\left\{ \begin{array}{c} \Delta C_t \\ \Delta M_t \\ \Delta Y_t \end{array} \right\}_n = \left\{ \begin{array}{c} C_t \\ M_t \\ Y_t \end{array} \right\}_{Soll} - \left\{ \begin{array}{c} C_t \\ M_t \\ Y_t \end{array} \right\}_n$$

als zu minimierender Regelabweichung.

Es kann vorkommen, daß eine geforderte Farbvalenz außerhalb des Farbartbereichs der vermessenen Druckskala liegt. Der Iterationsprozeß liefert in diesem Fall für eine oder mehrere Farben einen Flächendeckungsgrad >100 % oder <0 %. Für diese nicht darstellbaren, hochgesättigten Farben können Ersatzwerte gefunden werden.

Über die Grenzen der Skala hinaus zu extrapolieren ist nicht zulässig, da der so gefundene Ersatzwert davon abhängt, an welcher Stelle der Farbwürfel der Skala während der Iteration verlassen wird, also vom Startwert abhängig ist. Das Ergebnis sind Unstetigkeiten (Farbsprünge) bei hochgesättigten Farben, die eine solche Transformation als nicht ausreichend erscheinen lassen. Nachträglich auf die dreidimensionale Tabelle angewendete Mittelungsprozesse verschieben diese Fehler nur, beseitigen sie aber nicht. Zur Beseitigung dieser Schwierigkeit wird auf ein anderes Farbmodell, nämlich ein HSL-Farbmodell übergegangen, das Farbton, Sättigung und Luminanz der Farben angibt.

Verläßt der Iterationsprozeß den Farbraum der Skala, dann kann die geforderte Farbvalenz durch Korrektur auf die nächste, mit der Skala erreichbare erzeugt werden.

Die Ersatzfarbe darf eine geringere Sättigung und bei sehr hellen oder sehr dunklen Tönen auch eine leicht andere Luminanz haben. Unzulässig sollten aber Änderungen im Farbton (Hue) sein. Erfindungsgemäß wird ein Farbraum analog zum CIELab-Modell definiert und auf diesen auf HSL (Farbton, Sättigung, Luminanz) umgerechnet:

Es gilt:

$$L = 116 \, ( \sqrt[3]{(Y/Y_0)} - 16)$$

$$a = 500 \, ( \sqrt[3]{(X/X_o)} - \sqrt[3]{(Y/Yo)})$$

$$b = 200( \sqrt[3]{(Y/Y_o)} - \sqrt[3]{(Z/Z_o)})$$

$$H = \arctan (b/a)$$

$$S = \sqrt{(a^2 + b^2)}.$$

Für die Quantisierung dieses Farbraumes wird eine Tabelle mit 20bit großem Adressraum, unterteilt in 128 Stufen für die Luminanz, 128 Stufen für den Farbton und 64 Stufen für die Sättigung reserviert. Der Maximalwert für L werde für maximale Aussteuerungen von R, G und B erreicht. Die Sättigung werden auf den maximalen in den Blautönen auftretenden Wert R = 0, G = 0, B = max normiert. So wird der gesamte Raum positiver EBU-RGBs abgedeckt.

Es gilt:

$$\left\{ \begin{array}{c} X \\ Y \\ Z \end{array} \right\} = \left\{ \begin{array}{ccc} 0.4303 & 0.3416 & 0.1782 \\ 0.2219 & 0.7068 & 0.0713 \\ 0.0202 & 0.1296 & 0.9387 \end{array} \right\} \left\{ \begin{array}{c} R \\ G \\ B \end{array} \right\}$$

Die Fig. 7 zeigt den Farbraum in perspektivischer Ansicht, wobei die Luminanz L in vertikaler Richtung, die Farbtöne H in unterschiedlichen Winkeln und die Sättigung S in horizontaler Richtung dargestellt sind. In den Farbraum gemäß Fig. 7 sind die oben angegebenen Werte eingetragen. In einer dreifachen Schleife werden nun, wie beschrieben, für alle auftretenden Kombinationen von HSL aus der hochinterpolierten Druckskala die zugehörigen Werte für CMY herausiteriert. Dabei läuft die innere Schleife stets von 0 bis zur maximalen Sättigung. So kann der Punkt, an dem der geforderte Farbwert den Bereich der Skala verläßt, nur von der Sättigung abhängig gefunden werden. Allen S über diesem Wert wird dann bei konstantem L und H das CMY-Tripel des letzten erreichten Farbwertes zugeordnet.

Die oben beschriebenen Maßnahmen beziehen sich auf dreifarbig aufgebaute Skalen. Die vollständige Integration der üblichen vierten Farbe Schwarz in der Druckskala würde eine Abbildung des dreidimensionalen Ausgangsraums auf eine in vier Dimensionen aufgebaute Skala erfordern. Statt $n^3$ Feldern müßten deren $n^4$ vermessen werden, die Interpolation erstreckte sich auf $32^4$-Felder, und die Umstülpung müßte unter Annahme einer Nebenbedingung für Schwarz parallel zwischen 32 3D-Räumen iterieren. So erstellte Transformationstabellen würden bis hin zum vollständigen Unbuntaufbau korrekte Werte für jeden Grad der Buntfarbenreduktion (GCR) liefern.

Mit wesentlich geringerem Aufwand kann man einen Schwarzauszug generieren, der allen Anforderungen an ein sogenanntes Skelettschwarz gerecht wird, eine Begrenzung des maximalen Flächendeckungsgrades aller Farben auf Werte ab ca. 280 % (UCR) ist ohne wesentliche Verfälschungen des Farbeindrucks möglich.

Es wird das HSL-Modell zugrunde gelegt. Ausgehend von diesem wird zunächst die Abhängigkeit der Luminanz, d. h. der L-Komponente von Schwarz bestimmt. Dazu wird eine Testform angedruckt, welche n bunt aufgebaute Graubalken enthält. Jedem dieser Balken wird wachsend ein kosntanter Schwarzanteil zugefügt, do daß n "Schwarzleitern" entstehen. Für deren Vermessung genügt ein Densitometer, lediglich die Dichtewerte müssen in Luminanzen (L) umgerechnet werden. Ein eventueller Farbstich der schwarzen Druckfarbe geht in diese Betrachtungen nicht ein.

Mit der schon erwähnten Spoineinterpolation wird die Datendichte dann so weit erhöht, daß für jede dreifarbig aufgebaute Luminanzebene die Abhängigkeit der Luminanzabnahme von der Schwarzzugabe in 1%-Schritten vorliegt. Läßt sich ein Farbton mit einer Sättigung bei vorgegebenem L nicht mehr dreifarbig erreichen, wird auf die nächsthöhere L-Ebene, die diesen Ton darstellen kann, ausgewichen und danach die Luminanz durch Zugabe von Schwarz bis auf den geforderten Wert reduziert. Fehler in der Sättigung sind dabei unvermeidlich, liegen aber sicher unter den durch dreifarbige Abdunklung erreichbaren. In dem in Fig. 8 dargestellten Diagramm ist die Luminanz L in senkrechter Richtung dargestellt. Die Sättigung S ist waagerecht gezeichnet. Der Farbton H wird als konstant angenommen. Mit a ist eine geforderte Farbvalenz bezeichnet, die sich bei vorgegebenem L nicht mehr erreichen läßt. Es wird dann auf die nächsthöhere in Fig. 8 mit b bezeichnete Farbvalenz übergegangen, die erreichbar ist. Danach wird durch Zugabe von Schwarz auf den geforderten Wert in Höhe von a zurückgegangen. Dieser geforderte Wert ist mit c bezeichnet. Streng genommen gelten die Übergänge zwischen den Ebenen durch das Schwarz nur in der (vermessenen) Unbuntachse. Hochgesättigte Farben erfahren unter Umständen eine leichte Veränderung des Bunttones oder werden etwas heller oder dunkler als gefordert abgebildet. Der so generierte Schwarzauszug unterscheidet sich von einem herkömmlichen aus der Beziehung

$$K = \text{Gradation} * \text{Min} (C_s, M_s, Y_s)$$

abgeleiteten durch eine moderate Buntfarbenreduktion (GCR) und somit eine höhere Zugabe von Schwarz in dunklen, satten Tönen. Dieser Effekt ist willkommen, ermöglicht er doch die etwas reinere Darstellung dieser Farben. Eine harte Begrenzung der maximalen Gesamtflächendeckung (UCR) findet nicht statt. Sie ist wegen der automatischen Rücknahme der Buntfarben auch nicht unbedingt notwendig, kann aber durch Anwendung der herkömmlichen UCR-Prozesse auf den fertigen Farbkörper nachgeholt werden.

Zur Laufzeit des Farbreproduktionssystems muß die gesamte Konversionstabelle RGB-CMYK im Hauptspeicher des Rechners stehen. Dieser ist im allgemeinen begrenzt. Eine direkte Abbildung aller 3*8 bit RGB-Kombinationen (16 Mio Farben) ist deshalb meist nicht möglich. Abhilfe schafft hier zweckmäßigerweise ein doppelter Tabelleneinsprung. Die 256 diskreten Amplituden je Primärfarbe werden über die erste Tabelle in k Klassen repräsentativer Werte eingeteilt (k<256). Die dreidimensionale Konversionstabelle wird mit diesen Klassen angesteuert, enthält also nur noch $K^3$ Einträge.

Die Fig. 9 zeigt eine entsprechende Speicheraufteilung. Für die Primärvalenz R ist eine erste Tabelle (23) vorgesehen. Jede weitere Primärvalenz weist eine Tabelle (24) bzw. (25) auf. Die Tabellen (23) bis (25) werden zur Adressierung der dreidimensionalen Konversionstabelle (26) benutzt. Um die mögliche Dynamik der Tabelle zu otpimieren, werden die Klassen so gewählt, daß die Quantisierung an die menschliche Empfindlichkeitskurve angepaßt ist. In Anlehnung an die Literatur (Munsellkurve, CIELab) teilen wir die Primärvalenzen in k unter der 3. Wurzel in gleichgroße Bereiche ein. Danach ergäbe sich in dunklen Tönen eine feinere Auflösung als 1/256. Diese wird nicht benutzt, daher wird in diesem Teil jede Stufe der Eingangsgröße direkt abgebildet. Eine brauchbare Farbwiedergabe läßt sich bereits mit k = 64 erreichen. Allerdings treten bei der Wiedergabe eines Graukeiles noch deutlich wahrnehmbare Stufen auf. Will man eine nachträgliche Operation zur "Glättung" der Separationen (z. B. durch Zufügen von Rauschen) vermeiden, ist es ratsam, k auf 80 zu erhöhen. Der Speicherbedarf des Farbkörpers beträgt dann 2 Mbyte.

Die Fig. 10 zeigt im Diagramm die lineare Stufung in Abhängigkeit von den RGB-Quantisierungsklassen. Vom farbmetrischen Standpunkt her soll der Farbkörper die nötige Transformation bereits optimal bewerkstelligen, so daß eine nachträgliche Modifikation der CMYK-Separationen die Abbildungsqualität nur verschlechtern könnte.

Zunächst wird die Skala des Wiedergabeprozesses angedruckt. Die bunt aufgebaute Grauachse der Skala wird zuerst untersucht. Sie gibt Aufschluß über die weiter zu vermessenden Tonwertstufen (z. B. je 5), welche die 125 Stützstellen der Skala für den Interpolationsprozeß bilden sollen. Es folgt die (an sich unabhängige) Messung der Schwarzleitern (ca. 25 Felder).

Die Messung selbst wird vorzugsweise mit dem Spektralfotometer (6) durchgeführt. Die Spektren werden auf das einer Standardweißkachel normiert und mit der Charakteristik einer der üblichen Lichtquellen (D 50, D 53, D 65) und den Normspektralwertkurven des CIE 2° Normalbeobachters für X, Y, Z bewertet. Die verschiedenen Normlichtarten erfordern bei der Umrechnung in EBU-RGB verschiedene Zentrierungen, damit unbunte Töne im System 3 gleich große Werte haben.

Auf die oben beschriebene Weise werden durch die Einführung eines an die Druckskala angepaßten Modell-CMY-Koordinatensystems die Daten linearisiert, die Genauigkeit der Interpolation steigt (zweistufiges System, erst mathematisch an die Skala annähern und dann erst die Meßwerte verarbeiten). Die einzelnen Elemente des zu reproduzierenden Bildes werden nacheinander einzeln von RGB bzw. XYZ nach CMY transformiert (Iteration). Das Verfahren kann durch cache-Prozeduren beschleunigt werden.

Der in RGB überstreichbare Farbbereich wird in k wahrnehmungsangepaßte Klassen je Koordinatenachse quantisiert. Für alle k-möglichen Kombinationen von R, G und B wird (ohne zu verarbeitendes Bild) der entsprechende Farbwert in CMY vorab ermittelt (doppelter Tabellenzugriff). Zur Laufzeit des Farbsystems geht die Separation daher dann sehr schnell (look up table). Erst durch die Nachquantisierung (k = 64 = 80 = 100 1 MB - 2 MB - 8 MB) wird der Aufbau der look up table vom Speicherbedarf her möglich.

Durch den Zwischenschritt über ein Hue-Saturation-Lightness-Farbmodell können nicht abbild bare Farben leicht auf die Oberfläche des CMY-Druckfarbenkörpers abgebildet werden. Dabei kann man den Fehler in jede beliebige der empfindungsgemäß orthogonalen (!) Achse fallen lassen. Das Verfahren wird insbesondere durch die Verwendung der wahrnehmungsaktiven Klassen praktikabel.

Durch den HSL-Zwischenschritt kann der Einfluß von Schwarz (Abdunkelung, Entsättigung) in zwei statt drei Koordinaten (Farbtoneinflüsse vernachlässigen) beschrieben werden. So kann ein tonwertrichtiges Skelettschwarz, wie auch die Substitution des durch Buntfarben ermischten Grauanteils durch Schwarz berechnet werden, d. h. der Farbton ist in erster Näherung nicht von der Schwarzzugabe abhängig.

Es gilt:

$$\partial H / \partial K = 0.$$

Diese Nebenbedingung spannt n 3D-Räume in L, S, K auf.

Das erspart die Iteration in 4 Dimensionen (C, M, Y, K).

**Patentansprüche**

1. Verfahren zur Erzeugung einer digitalen Drucktabelle für Druckfarben bei Bildreproduktionsgeräten aus durch photoelektrische Abtastung einer Vorlage gewonnenen Farbabtastwerten, <u>dadurch gekennzeichnet,</u> daß die Vollfarben der drei Druckfarben und Weiß durch Abtastung entsprechender Vorlagen gemessen werden, daß Modellfarben bestimmt werden, die in annähernd linearer Beziehung zu den Druckfarben durch eine derartige Lage des Farbartbereichs der Druckskala stehen, daß die Primärvalenzen der Modellfarben im Farbartdiagramm je auf einem Strahl der Trajektorien der Vollfarben der drei Druckfarben durch den Weißpunkt liegen, und das zwischen den Primärvalenzen aufgespannte Dreieck den Farbartbereich der Druckskala umschließt, daß die Modellfarben so gewählt werden, daß die Achsenteilung dieses Modellfarbraums an die Stufung der Druckfarbe angepaßt wird, indem die Teilung entsprechend der dritten Wurzel vorgenommen wird, daß aus den Raumdiagonalen der Druckfarben in Abhängigkeit von den Modellfarben die Anzahl der abzutastenden Meßfelder einer Vorlage bestimmt wird, deren Abtastwerte durch eine kubische Splineinterpolation mit einer höheren Stützstellenanzahl zur Gewinnung der Drucktabelle weiterverarbeitet werden, daß die Werte der Modellfarben je in Abhängigkeit von den Druckfarbenwerten abgespeichert werden und daß für die Modellfarben die Farbvalenzen für Cyan, Magenta und Gelb nach folgenden Beziehungen von den Primärfarben abhängen:

$$C_t = \sqrt[3]{(1-R)}, \ M_t = \sqrt[3]{(1-G)} \ \text{und} \ Y_t = \sqrt[3]{(1-B)}$$

worin mit

$$C_t, M_t, Y_t$$

die Valenzen Cyan, Magenta und Gelb und mit "R, G, B" die Primärvalenzen Rot, Grün und Blau bezeichnet sind, daß die Raumdiagonale in mehreren Abtastpunkten erfaßt wird und zur Festsetzung von Abtastwerten benutzt wird, und daß die dritte Potenz der Abtastwerte die Anzahl der abzutastenden Meßfelder bestimmt.

2. Verfahren nach Anspruch 1, dadurch gekennzeichnet, daß für gemäß der Drucktabelle nicht druckbare Farben ein Helligkeits/Sättigungs/Farbton-Modell zur Bestimmung von Ersatzwerten der Farben eingesetzt wird, wobei unter Beibehaltung des Farbtons die nach der menschlichen Empfindungskurve gleichabständigen und orthogonalen Werte der Helligkeit und Sättigung angepaßt werden.

3. Verfahren nach einem oder mehreren der vorhergehenden Ansprüche, dadurch gekennzeichnet, daß die Iteration für alle für den Druck erforderlichen Kombinationen in einem Valenzsystem jeweils von einem beliebigen Punkt in der Druckskalentabelle ausgeht und zunächst die Differenz zwischen der jeweils geforderten Farbvalenz und einem beliebigen Skaleneinsprung sowie das vollständige Differential in diesem Punkt zur Festlegung eines Vektors erzeugt, der nach Betrag und Richtung in Skaleninkrementen den Übergang zu einem anderen, der geforderten Farbvalenz näherkommenden Skaleneinsprung angibt, für den entsprechende Rechenschritte zur Festlegung eines weiteren Vektors durchgeführt werden, der den Übergang zu einem, der geforderten Farbvalenz besser entsprechenden Skaleneinsprung angibt, wobei die Rechenschritte zur Bestimmung zusätzlicher Skaleneinsprünge so lange wiederholt werden, bis der sicher gehende Skaleneinsprung gleich bleibt, und wobei dann noch verbleibende Farbdifferenzen durch lineare Interpolation minimiert werden.

4. Verfahren vorzugsweise nach einem oder mehreren der vorhergehenden Ansprüche, dadurch gekennzeichnet, daß für die Farbvalenzen außerhalb des Farbartbereichs der vermessenen Druckskala die jeweilige Farbvalenz unter Bezug auf die mit der Druckskala erreichbare nächstliegende Farbvalenz unter Beibehaltung des Farbtons durch Änderung der Sättigung und gegebenenfalls der Luminanz nach dem Helligkeits/Sättigungs/ Farbton-Modell korrigiert wird.

5. Verfahren nach einem oder mehreren der vorhergehenden Ansprüche, dadurch gekennzeichnet, daß für das Helligkeits/ Sättigungs/Farbton-Modell folgende Beziehungen gelten:

$$L = 116(3\sqrt[3]{(Y/Y0)} - 16)$$

$$a = 500 (3\sqrt[3]{(X/Xo)} - 3\sqrt[3]{(Y/Yo)})$$

$$b = 200 (3\sqrt[3]{(Y/Yo)} - 3\sqrt[3]{(Z/Zo)})$$

$$H = \arctan (b/a)$$

$$S = \sqrt{a^2 + b^2}$$

mit $X_0, Y_0, Z_0$ als Farbvalenz des Weißpunktes und worin mit "L" die Luminanz, mit "H" der Farbton, mit "S" die Sättigung und mit "X, Y, Z" die Normalvalenzen bezeichnet sind, daß in einer Tabelle mit je einem Adreßraum für die Luminanz, den Farbton und die Sättigung die entsprechenden Werte unter Festlegung des maximalen Werts der Luminanz für maximale Aussteuerungen der Primärvalenzen und unter Normierung der Sättigung auf den maximalen in den Blautönen auftretenden Wert abgelegt sind, und daß für alle auftretenden Kombinationen des Farbtons, der Sättigung und der Luminanz durch Iteration die Werte der Druckfarben bestimmt und gespeichert werden.

6. Verfahren nach einem oder mehreren der vorhergehenden Ansprüche, dadurch gekennzeichnet, daß die Funktion einer Abdunkelung für eine Druckfarbe in Abhängigkeit von Schwarz vorgegeben wird, und daß bei einer Farbvalenz, deren Helligkeit durch Zugabe der anderen Farbvalenzen nicht erreichbar ist, schwarze Druckfarbe zugegeben wird, wobei eine Berechnung im HSL-Raum erfolgt.

**7.** Verfahren vorzugsweise nach zumindest einem der vorhergehenden Anssprüche, <u>dadurch gekennzeichnet,</u> daß die Berechnung unter der Annahme einer Orthogonalität von H und K abschnittsweise im dreidimensionalen Unterraum LSK an der Stelle H erfolgt.

**8.** Verfahren nach einem oder mehreren der vorhergehenden Ansprüche, <u>dadurch gekennzeichnet,</u> daß die Primärfarben jeweils in eine Anzahl Klassen repräsentativer Werte eingeteilt werden, die in einer gesonderten Tabelle gespeichert sind, und daß die Werte dieser Tabellen die dreidimensionale Tabelle der Druckfarben ansteuert.

**9.** Verfahren nach einem oder mehreren der vorhergehenden Ansprüche, <u>dadurch gekennzeichnet,</u> daß die Klassen an die menschliche Empfindungskurve angepaßt sind.

**10.** Vorrichtung zur Durchführung des Verfahrens nach einem oder mehreren der vorhergehenden Ansprüche, <u>dadurch gekennzeichnet,</u> daß eine Lichtquelle und ein Meßkopf (5) vorgesehen sind, an den ein Spektralfotometer (6) angeschlossen ist, an das ausgangsseitig ein mit einer Ablaufsteuerung (7) gesteuerter kubischer Splineinterpolator (10) angeschlossen ist, mit dem ein von der Ablaufsteuerung (7) gesteuerter digitaler Speicher (11) verbunden ist.

**11.** Vorrichtung nach Anspruch 12, <u>dadurch gekennzeichnet,</u> daß die Ablaufsteuerung ein Zentralrechner ist.

## Claims

**1.** A method for the production of a digital printing table for printing colours in image reproduction equipment from colour scan values obtained through photoelectric scanning of an original, <u>characterised in that</u> the full colours of the three printing colours and white are measured by scanning corresponding originals, that model colours are determined, which are in approximately linear relationship to the printing colours through such a position of the colour type range of the printing scale that the primary valences of the model colours in the colour type diagram each lie on a beam of the trajectories of the full colours of the three printing colours through the white point, and the triangle set up between the primary valences surrounds the colour type range of the printing scale, that the model colours are selected so that the axis division of this model colour space is matched to the graduation of the printing colour, in which the division is carried out in accordance with the cube root, that from the space diagonals of the printing colours as a function of the model colours, the number of measurement fields of an original, which are to be scanned, is determined, the scanning values of which are further processed through a cubic spline interpolation with a higher support site number to obtain the printing table, that the values of the model colours are each stored as a function of the printing colour values and that for the model colours, the colour valences for cyan, magenta and yellow depend on the primary colours according to the following relationships:

$$Ct = \sqrt[3]{(1-R)}, \ Mt = \sqrt[3]{(1-G)} \text{ and } Yt = \sqrt[3]{(1-B)}$$

in which

$$C_t, \ M_t, \ Y_t$$

designate the valences cyan, magenta and yellow and "R,G,B" designate the primary valences red, green and blue, that the space diagonal is picked up in several scanning points and is used to establish the scanning values, and that the third power of the scanning values determines the number of measurement fields which are to be scanned.

**2.** A method according to Claim 1, <u>characterised in that</u> for colours which are not able to be printed according to the printing table, a brightness/saturation/colour tone model is used to determine substitute values of the colours in which, with the colour tone being maintained, the values of brightness and saturation, which are equally spaced and orthogonal according to the human perception curve, are matched.

3. A method according to one or more of the preceding claims, <u>characterised in that</u> the iteration for all combinations necessary for printing proceeds in a valence system in each case from an arbitrary point in the printing scale table and firstly produces the difference between the respectively required colour valence and an arbitrary scale grade and also the complete differential in this point to establish a vector, which according to the amount and direction in scale increments indicates the transition to another scale grade which comes closer to the required colour valence, for which scale grade corresponding calculation steps are carried out to establish a further vector, which indicates the transition to a scale grade better corresponding to the required colour valence, in which the calculation steps to determine additional scale grades are repeated until the definite scale grade remains the same, and in which then any remaining colour differences are minimised through linear interpolation.

4. A method preferably according to one or more of the preceding claims, <u>characterised in that</u> for the colour valences outside the colour type range of the measured printing scale, the respective colour valence is corrected with reference to the closest colour valence able to be achieved with the printing scale, whilst maintaining the colour tone by altering the saturation and if necessary the luminance according to the brightness/saturation/colour tone model.

5. A method according to one or more of the preceding claims, <u>characterised in that</u> the following relationships apply for the brightness/saturation/colour tone model:

$$L = 116 \, (3 \sqrt[3]{(Y/YO)} - 16)$$

$$a = 500 \, (3 \sqrt[3]{(X/Xo)} - 3 \sqrt[3]{(Y/Yo)})$$

$$b = 200 \, (3 \sqrt[3]{(Y/Yo)} - 3 \sqrt[3]{(Z/Zo)})$$

$$H = \arctan(b/a)$$

$$S = (a2 + b2)$$

with $X_0$, $Y_0$, $Z_0$ as colour valence of the white point and in which "L" designates the luminance, "H" designates the colour tone, "S" designates the saturation and "X,Y,Z" designate the normal valences, that in a table with an address space in each case for the luminance, the colour tone and the saturation, the corresponding values are deposited, establishing the maximum value of luminance for maximum modulations of the primary valences and with standardization of the saturation to the maximum value occurring in the blue tones, and that for all occurring combinations of the colour tone, of the saturation and of the luminance through iteration the values of the printing inks are determined and stored.

6. A method according to one or more of the preceding claims, <u>characterised in that</u> the function of a darkening for a printing ink is given as a function of black, and that with a colour valence, the brightness of which can not be achieved through the addition of the other colour valences, black printing colour is added, in which a calculation takes place in the HSL area.

7. A method preferably according to at least one of the preceding claims, <u>characterised in that</u> the calculation takes place with the assumption of an orthogonality of H and K in sections in the three-dimensional lower area LSK at the H position.

8. A method according to one or more of the preceding claims, <u>characterised in that</u> the primary colours are divided in each case into a number of classes of representative values which are stored in a separate table, and that the values of these tables are controlled by the three-dimensional table of the printing inks.

9. A method according to one or more of the preceding claims, <u>characterised in that</u> the classes are adapted to the human perception curve.

10. A device to carry out the method according to one or more of the preceding claims, <u>characterised in that</u> a light

source and a measurement head (5) are provided, to which a spectral photometer (6) is connected, which is connected at the output side with a cubic spline interpolator (10) controlled by a sequence control (7), with which spline interpolator (10) a digital memory (11) is connected which is controlled by the sequence control (7).

11. A device according to Claim 12, <u>characterised in that</u> the sequence control is a central computer.

**Revendications**

1. Procédé pour générer des tableaux d'impression numériques pour des couleurs d'impression destinées à des appareils de reproduction d'image à partir de valeurs de détection de couleurs obtenues par détection photoélectrique d'un modèle,
caractérisé en ce que
les couleurs pleines des trois couleurs fondamentales et le blanc sont mesurés par détection de modèles correspondants, on détermine les couleurs de modèles qui sont liées par une relation pratiquement linéaire aux couleurs d'impression par une telle position de la zone de nature de couleurs de l'échelle d'impression, les valences primaires des couleurs du modèle dans le diagramme de nature de couleurs se situent sur un tracé des trajectoires des couleurs pleines des trois couleurs d'impression passant par le point de blanc, le triangle sous-tendu par les valences primaires entoure la plage des types de couleurs de l'échelle d'impression, on choisit les couleurs de modèles pour que la subdivision de l'axe de cet espace de couleurs de modèles soit adaptée à la graduation de la couleur d'impression, en prenant pour la division, la racine cubique, à partir des diagonales dans l'espace des couleurs d'impression, en relation avec les couleurs du modèle, on définit le nombre des champs de mesure à détecter dans le modèle, dont les valeurs de détection sont traitées par une interpolation spline cubique, avec un nombre de points d'appui plus élevé pour former le tableau d'impression, on enregistre les valeurs des couleurs du modèle en fonction des valeurs des couleurs d'impression, et pour les couleurs du modèle, les valences de couleurs pour le cyan, le magenta et le jaune sont liées par les relations suivantes avec les couleurs primaires :

$$Ct = \sqrt[3]{(1\text{-}R)} \text{ , Mt} \sqrt[3]{(1\text{-}G)} \text{ , et Yt} \sqrt[3]{(1\text{-}B)}$$

dans lesquelles,

$$C_t, M_t, Y_t$$

représentent les valences de cyan, de magenta et de jaune et les références R, V, B, désignent les valences primaires de rouge, vert, bleu, on détecte la diagonale dans l'espace en plusieurs points de détection, on l'utilise pour fixer les valeurs de détection, et la puissance cubique des valeurs de détection définit le nombre des champs de mesure à détecter.

2. Procédé selon la revendication 1,
caractérisé en ce que
pour des couleurs qui ne peuvent être imprimées par le tableau d'impression, on utilise un modèle de clarté/saturation/teinte pour définir des valeurs de substitution des couleurs et, en conservant la teinte, on adapte à la clarté et à la saturation, les valeurs équidistantes et orthogonales selon la courbe de sensibilité de l'oeil.

3. Procédé selon l'une ou plusieurs des revendications précédentes,
caractérisé en ce que
l'itération, pour toutes les combinaisons nécessaires à l'impression dans un système de valences, part chaque fois d'un point quelconque du tableau des échelles d'impression, et l'on forme tout d'abord la différence entre la valence de couleurs chaque fois nécessaire et un saut d'échelle quelconque ainsi que la différentielle totale en ce point pour fixer un vecteur qui, selon son amplitude et sa direction dans des incréments d'échelle, modifie le passage de l'un à l'autre, en indiquant le saut d'échelle le plus proche de la valence de couleurs demandée, pour des étapes de calcul correspondantes fixant un autre vecteur qui indique le passage à un saut d'échelle correspondant mieux à la valence de couleurs demandée, les étapes de calcul pour déterminer les sauts d'échelle supplémentaires étant répétées jusqu'à ce que le saut d'échelle qui convient certainement, reste constant et qu'ainsi une différence de couleurs qui subsiste soit réduite au minimum par interpolation linéaire.

4. Procédé de préférence selon l'une ou plusieurs des revendications précédentes,
caractérisé en ce que
pour la valence de couleurs, en dehors de la plage des natures de couleurs de l'échelle d'impression mesurée, on corrige la valence de couleurs respective en tenant compte de la valence de couleur la plus proche que l'on peut obtenir sur l'échelle d'impression en conservant la teinte par modification de la saturation et, le cas échéant, de la luminance selon le modèle de clarté/saturation/teinte.

5. Procédé selon l'une ou plusieurs des revendications précédentes,
caractérisé en ce que
on utilise les relations suivantes pour le modèle de clarté/saturation/teinte :

$$L = 116 \, (3 \sqrt[3]{(Y/YO)} - 16)$$

$$a = 500 \, (3 \sqrt[3]{(X/Xo)} - 3 \sqrt[3]{(Y/Yo)})$$

$$b = 200 \, (3 \sqrt[3]{(Y/Yo)} - 3 \sqrt[3]{(Z/Zo)})$$

$$H = \arctan (b/a)$$

$$S = (a2+b2)$$

$X_0$, $Y_0$, $Z_0$ étant la valence de couleurs du point blanc et « L » la luminance, « H » désignant la teinte et « S » la saturation, « X, Y, Z » désignant les valences normales, et dans un tableau avec chaque fois un espace d'adresse pour la luminance, la teinte et la saturation, on enregistre les valeurs correspondantes en fixant la valeur maximale de la luminance pour le débattement de commande maximum des valences primaires, en normalisant la saturation à la valeur maximale se présentant dans les teintes bleues, et pour toutes les combinaisons susceptibles de se produire de la teinte de couleur de la saturation et de la luminance, on définit des valeurs des couleurs d'impression par itération et on les met en mémoire.

6. Procédé selon l'une ou plusieurs des revendications précédentes,
caractérisé en ce que
on prédétermine la fonction en assombrissant pour une couleur d'impression en fonction du noir, et pour une valence de couleurs dont la clarté ne peut être obtenue par addition d'autres valences de couleurs, on ajoute une couleur d'impression noire et le calcul se fait alors dans l'espace HSL.

7. Procédé selon au moins l'une des revendications précédentes,
caractérisé en ce que
le calcul se fait en supposant une orthogonalité par segment entre H et K dans le sous-espace tridimensionnel de LSK à l'emplacement H.

8. Procédé selon l'une ou plusieurs des revendications précédentes,
caractérisé en ce que
les teintes primaires sont réparties chaque fois en un nombre de valeurs représentant des classes et qui sont enregistrées dans un tableau particulier, et les valeurs de ces tableaux commandent le tableau tridimensionnel des couleurs d'impression.

9. Procédé selon l'une ou plusieurs des revendications précédentes,
caractérisé en ce que
les classes sont adaptées à la courbe de sensibilité de l'oeil humain.

10. Dispositif pour la mise en oeuvre du procédé selon l'une ou plusieurs des revendications précédentes,
caractérisé par
une source lumineuse et une tête de mesure (5) munie d'un spectromètre à infrarouges (6) et, en sortie, on a un interpolateur spline (10), cubique, commandé par une commande de procédé (7), relié à une mémoire numérique (11) commandée par la commande de procédé (7).

11. Dispositif selon la revendication 12,
    caractérisé en ce que
    la commande de procédé est faite par un calculateur central.

FIG.1

FIG.3

FIG.4a

FIG.4b

FIG. 2

```
                    ( Start )              13
                        │                  ⟋
        ┌───────────────▼───────────────┐
        │ Messe  Vollfarben  C_S,M_S,Y_S und Weiß │
        └───────────────┬───────────────┘
   ┌────────────────────▼────────────────────┐
   │ Berechne  aus den gemessenen Daten Primärvalenzen des │──14
   │ Modellsystems C_t,M_t,Y_t und Lade  Farbtransformator 9 │
   └────────────────────┬────────────────────┘
      ┌─────────────────▼─────────────────┐
      │ Bestimme  Raumdiagonale der Druckskala 12 │──15
      │ [C_S-M_S-M_t] in m Punkten mit m ≥ 10 │
      └─────────────────┬─────────────────┘
      ┌─────────────────▼─────────────────┐
      │ Berechne aus ( C_t,M_t,Y_t ) = f ( C_S,M_S,Y_S ) die n │──16
      │ minimal notwendigen Stützstellen ( n ≤ 7 ) │
      └─────────────────┬─────────────────┘
    ┌───────────────────▼───────────────────┐
    │ Generiere  Meßvorschrift für n³ Meßfelder der Druckskala │──17
    └───────────────────┬───────────────────┘
        ┌───────────────▼───────────────┐
        │ Nimm  n³ Meßwerte aus Druckfeldern auf │──18
        └───────────────┬───────────────┘
      ┌─────────────────▼─────────────────┐
      │ Interpoliere C_t,M_t,Y_t in allen drei  Dimensionen über │──19
      │ C_S,M_S,Y_S auf j³ Stützstellen mit  j ≥ 20 │
      └─────────────────┬─────────────────┘
      ┌─────────────────▼─────────────────┐
      │ Fülle den digitalen Speicher 11 mit den │──20
      │ interpolierten  Stützstellen │
      └─────────────────┬─────────────────┘
                    ( Ende )
```

FIG. 5a     FIG. 5b     FIG. 5c

## FIG.6a

## FIG.6b

## FIG.7

## FIG.8

## FIG.9

## FIG.10

RGB-Quantisierungsklassen
(Dargestellt durch Durchschnittswerte)